# EUROPÄISCHE PATENTSCHRIFT

(11) **EP 3 401 988 B1**
(45) Veröffentlichungstag und Bekanntmachung des Hinweises auf die Patenterteilung: **30.10.2019**
(21) Anmeldenummer: 18167737.8
(22) Anmeldetag: 17.04.2018
(51) Int. Cl.: H01M 8/04014, H01M 8/0612, H01M 8/04664, H01M 8/04537, H01M 8/0438, H01M 8/0432, H01M 8/0668, H01M 8/124

(54) **VERFAHREN ZUM ERKENNEN ERHÖHTER CO-EMISSIONEN BEI EINEM BRENNSTOFFZELLEN-HEIZSYSTEM**
METHOD FOR DETECTING INCREASED CO EMISSIONS IN A FUEL CELL HEATING SYSTEM
PROCÉDÉ DE DÉTECTION D'ÉMISSIONS DE CO AUGMENTÉES DANS UN SYSTÈME DE CHAUFFAGE À PILE À COMBUSTIBLE

(30) Priorität: 09.05.2017 DE 102017109903
(43) Veröffentlichungstag der Anmeldung: 14.11.2018
(73) Patentinhaber: Vaillant GmbH, 42859 Remscheid (DE)
(72) Erfinder: Reinert, Andreas, 58455 Witten (DE); Rottschy, Claudia, 45549 Sprockhövel (DE); Plümke, Marco, 40589 Düsseldorf (DE); Alff, Carsten, 53567 Buchholz (DE)
(74) Vertreter: Popp, Carsten

(56) Entgegenhaltungen:
- EP-A1- 2 164 124
- EP-A1- 2 284 938
- EP-A1- 2 808 298
- EP-A2- 2 424 021
- US-A1- 2009 176 136

## Beschreibung

Die Erfindung betrifft ein Verfahren zum Erkennen erhöhter CO-Emissionen bei einem Brennstoffzellen-Heizsystem. Ein Verfahren zur Steuerung eines gattungsgemäßen Brennstoffzellen-Heizsystems ist bekannt aus der Patentanmeldung EP2 824 743 A1.

Aus der EP 2 424 021 A2 ist eine Überwachung des Nachbrenners einer Brennstoffzellenanlage bekannt. Dabei werden verschiedene Parameter gemessen und mit Grenzwerten verglichen.

Ein gattungsgemäßes Brennstoffzellen-Heizsystem umfasst einen SOFC-Brennstoffzellen-Stack zur Erzeugung von Strom, einen Reformer zum Umwandeln des Brenngases in Bestandteile zur Reaktion im SOFC-Brennstoffzellen-Stack und einen Nachbrenner zum Nachverbrennen der den SOFC-Brennstoffzellen-Stack verlassenden Produkte in ungiftige Gase. Dabei ist insbesondere sicherzustellen, dass das Abgas des Brennstoffzellen-Heizsystems nur geringe Mengen an Kohlenmonoxid (CO) enthält. Hierzu kommen nach dem Stand der Technik CO-Sensoren zum Einsatz. Diese sind jedoch kostenintensiv.

Es ist daher Aufgabe der Erfindung, ein Verfahren zum Betreiben eines Brennstoffzellen-Heizsystems bereitzustellen, das eine kostengünstige Absicherung der CO-Emissionen des Brennstoffzellen-Heizsystems mittels Schätzung der CO-Emission ermöglicht.

Diese Aufgabe wird gemäß den Merkmalen des Anspruchs 1 dadurch gelöst, dass in einzelnen Verfahrensschritten anhand von Messwerten, die mit entweder ohnehin vorhandenen Sensoren oder mit preiswerten Sensoren ermittelt werden können, ermittelt wird, ob sich der Betriebszustand des Brennstoffzellen-Heizsystems innerhalb bestimmter Betriebsfelder befindet. Dazu werden die Temperatur des Nachbrenners, die Temperatur des Reformers, der Kathodenluft-Massenstrom und die Stackspannung überprüft. Ist der Betriebspunkt außerhalb dieser Grenzen, ist von einem erhöhten Kohlenmonoxidgehalt des Abgases auszugehen. Dazu werden alle Bedingungen überprüft und bei Überschreiten oder Unterschreiten eines der Grenzwerte ein erhöhter Kohlenmonoxidgehalt erkannt und ein Fehlersignal ausgegeben. Dieses Fehlersignal kann beispielsweise zu einer Störmeldung oder zu einer Notabschaltung führen. Der Kathodenluft-Massenstromsensor wird durch einen preiswerten Druckschalter gebildet.

In einer Verfahrensalternative wird das für Signal ausgegeben, sobald eine der Prüfungen eine Grenzwertverletzung ergeben hat. Bevorzugt werden dann die nachfolgenden Schritte nicht mehr ausgeführt.

Weiterbildungen der Erfindung berücksichtigen die Tatsache, dass beim Hochfahren des Brennstoffzellen-Heizsystems einzelne Grenzwerte verletzt werden, ohne dass dies einen Fehlerzustand darstellt.

Durch das erfindungsgemäße Verfahren kann eine Überwachung des Kohlenmonoxid-Gehalts des Abgases mit einfacher und preiswerter Sensorik erreicht werden.

Die Erfindung wird nun anhand der Figuren detailliert erläutert.

Es stellen dar:
Figur 1: schematisch und vereinfacht die Struktur eines Brennstoffzellen-Heizsystems zur Durchführung des erfindungsgemäßen Verfahrens,
Figur 2: in einem Diagramm über die Luftzahl Gesamtlambda aufgetragen die Adiabate Verbrennungstemperatur und die Kohlenmonoxid-Emissionen für verschiedene Mindestluftzahlen des Stacks.

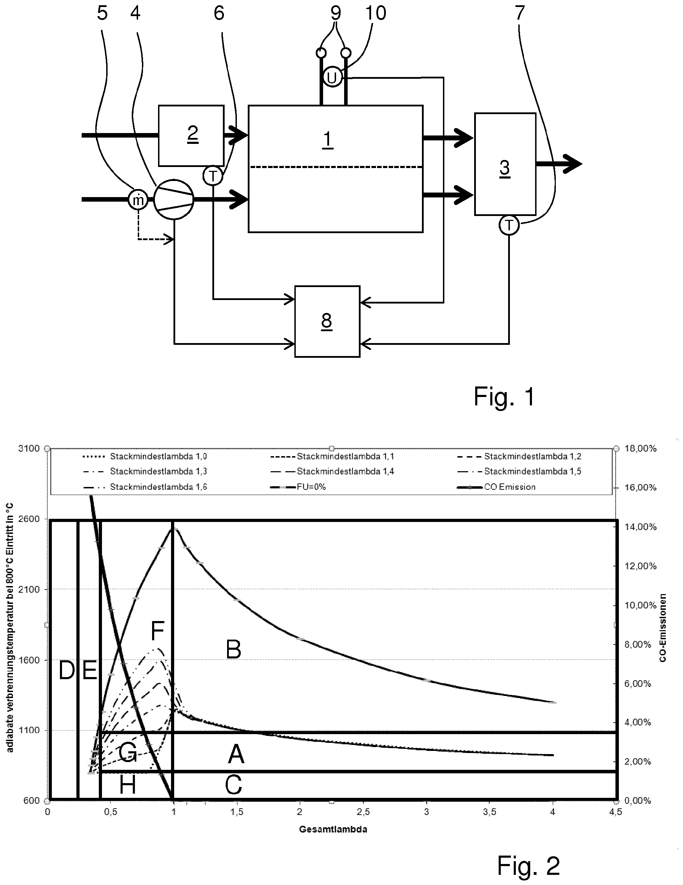

Figur 1 zeigt schematisch und vereinfacht die Struktur eines Brennstoffzellen-Heizsystems zur Durchführung des erfindungsgemäßen Verfahrens. Das Brennstoffzellen-Heizsystem umfasst einen SOFC-Brennstoffzellen- Stack 1 zur Erzeugung von elektrischem Strom, der an einen Stromausgang 9 zur Verfügung gestellt wird. Mittels eines Spannungssensors 10 wird die Stackspannung gemessen und einem Steuergerät 8 zur Verfügung gestellt. Dies kann mittels eines Sensors oder mittels eines Spannungsabgriffs mit Verbindung zum Steuergerät erfolgen.

Um den Stack auch mit Kohlenwasserstoffen wie zum Beispiel Erdgas betreiben zu können, ist dem Anodeneingang des Stacks 1 ein Reformer 2 vorgeschaltet, der ein Gemisch aus Brenngas und Luft umwandelt in wasserstoff- und kohlenmonoxidreiches Gas. Die Temperatur des Reformers 2 wird überwacht mittels eines Reformer-Temperatursensors 6 und das Messsignal wird dem Steuergerät 8 zugeführt.

Auf der Seite der Kathode des Stacks 1 wird über ein optionales Gebläse 4 Kathodenluft zugeführt. Dabei wird der Luftmassenstrom bzw. der damit verbundene Volumenstrom über einen Massenstromsensor 5 ermittelt. Im Fall des Massenstromsensors 5 ist dieser ein Druckschalter, der bei einem ganz bestimmten Massenstrom umschaltet. Auch der Messwert des Massenstroms wird dem Steuergerät 8 zugeführt.

Die den Stack 1 verlassenden Abgase werden in einem Nachbrenner 3 zugeführt, in dem brennbare Bestandteile des Abgases verbrannt werden. Mittels eines Nachbrenner-Temperatursensors 7 wird die Temperatur des Nachbrenners erfasst und dem Steuergerät 8 zugeführt.

Figur 2 stellt in einem Diagramm über die Luftzahl Gesamtlambda aufgetragen die adiabate Verbrennungstemperatur des Nachbrenners für verschiedene Mindestluftzahlen des Stacks sowie die Kohlenmonoxid-Emissionen dar.

In dem Kennfeld sind mit A bis H verschiedene Bereiche aufgetragen. Ein Betriebspunkt innerhalb des mit A gekennzeichneten Feldes wird als fehlerfrei angesehen. In den erfindungsgemäßen Verfahrensschritten, die chronologisch nacheinander oder gleichzeitig durchgeführt werden, wird geprüft, ob sich der aktuelle Betriebspunkt im Feld A befindet. Dazu wird geprüft, ob die Temperatur des Nachbrenners innerhalb der das Feld A begrenzenden Temperaturgrenzen ist. Ist dies der Fall, kann ein Betriebspunkt innerhalb der Felder B, C, F und H ausgeschlossen werden. Daher wird in weiteren Schritten geprüft, ob sich der Betriebspunkt nicht in den Feldern D, E oder G befindet. Ein Betriebspunkt im Feld D kann über die Reformertemperatur gemessen am Reformerausgang erkannt werden. Dies ist dann der Fall, wenn die Temperatur nicht größer als 550 °C, bevorzugt nicht größer als 640 °C ist. Ist der Betriebspunkt nicht im Feld D, wird geprüft, ob sich der Betriebspunkt im Feld E befindet. Dies ist dann der Fall, wenn der Gasvolumenstrom seinen maximal möglichen Wert erreicht und der dazu gehörige Kathodenluft-Massenstrom so klein ist, dass die Gesamtluftzahl kleiner 1 wird, ohne dass ein Überschreiten der Nachbrennertemperatur auftritt. Bei einem solch geringen Kathodenluftvolumenstrom würde der Abschaltgrenzwert des Kathodenluftmassestromsensors unterschritten und zur Abschaltung führen. Dies wird erfindungsgemäß daran festgemacht, dass der Kathodenluft-Massenstrom nicht größer als das 7,5-fache des Nenn-Gasmassenstroms im Nennbetrieb ist. Ist der Betriebspunkt nicht im Feld E, wird als nächstes geprüft, ob er sich im Feld G befindet. Dies ist dann der Fall, wenn die Stackspannung nicht größer als 0,65 V pro Zelle des Stacks ist. Wenn sich der Betriebspunkt nicht im Feld G befindet, kann davon ausgegangen werden, dass sich der Betriebspunkt in Feld A befindet. Damit liegt ein hinsichtlich der Kohlenmonoxid-Emission störungsfreier Betrieb vor. Alternativ kann in dem erfindungsgemäßen Verfahren auch zuerst alle Messwerte gesammelt werden und anschließend eine Auswertung auf die Grenzwerte erfolgen.

### Bezugszeichenliste

- 1: Brennstoffzellen-Stack
- 2: Reformer
- 3: Nachbrenner
- 4: Gebläse
- 5: Massenstromsensor
- 6: Reformer-Temperatursensor
- 7: Nachbrenner-Temperatursensor
- 8: Steuergerät
- 9: Stromausgang
- 10: Spannungssensor

## Patentansprüche

1. Verfahren zum Überwachen der Kohlenmonoxid-Emission eines Brennstoffzellen-Heizsystems mit einem Reformer (2), einem Brennstoffzellen-Stack (1) und einem Nachbrenner (3), einem Reformer-Temperatursensor (6) zum Erfassen der Reformertemperatur, einem Nachbrenner-Temperatursensor (7) zum Erfassen der Nachbrennertemperatur, einem Spannungssensor (10) zum Erfassen der Stackspannung und mit einem Massenstromsensor (5) zum Erfassen des Kathodenluft-Massenstroms
**gekennzeichnet durch** die zyklischen Schritte
a) prüfen, ob die Nachbrennertemperatur innerhalb eines Bereiches zwischen 750 und 1000 °C ist,
b) prüfen, ob die Reformertemperatur größer 550 °C, bevorzugt größer 640 °C ist,
c) prüfen, ob der Kathodenluft-Massenstrom größer dem 7,5-fachen Nenn-Gasmassenstrom im Nennbetrieb ist,
d) prüfen, ob die Stackspannung größer 0,65 V pro Zelle des Stacks ist,
e) Ausgabe eines Fehlersignals, wenn das Ergebnis der Prüfung eines der Schritte a) bis d) negativ war,
und **dadurch gekennzeichnet, dass** der Massenstromsensor (5) ein Druckschalter ist, der bei einem Kathodenluft -Massenstrom, der das 7,5-fache des Nenn-Gasmassenstroms beträgt, schaltet..

2. Verfahren nach Anspruch 1, **dadurch gekennzeichnet, dass** nach jedem der Schritte a) bis d) das Fehlersignal dann ausgegeben wird, wenn das Ergebnis der Prüfung des letzten Schrittes negativ war,

3. Verfahren nach Anspruch 2, **dadurch gekennzeichnet, dass** die nachfolgenden Schritte b), c), d) bzw. c), d) bzw. d) nicht mehr ausgeführt werden, wenn das Ergebnis der Prüfung eines der Schritte a), b) bzw. c) negativ war.

4. Verfahren nach einem der vorhergehenden Ansprüche, **dadurch gekennzeichnet, dass** nach einem Kalttart des Brennstoffzellen-Heizsystems die zyklischen Schritte a) und b) erst nach einer Startzeit von 1 bis 2 Minuten begonnen werden.

5. Verfahren nach einem der vorhergehenden Ansprüche, **dadurch gekennzeichnet, dass** nach dem Start des Brennstoffzellen-Heizsystems bis zum Ende eines Anlauf-Zeitraums von 3 bis 5 Minuten im Schritt d) geprüft wird, ob die Stackspannung größer 0,9 V pro Zelle des Stacks ist.

6. Verfahren nach einem der vorhergehenden Ansprüche, **dadurch gekennzeichnet, dass** bei einem Fehlersignal ein Kohlenmonoxid-Störmeldung ausgegeben wird.

7. Verfahren nach einem der vorhergehenden Ansprüche, **dadurch gekennzeichnet, dass** bei einem Fehlersignal eine Notabschaltung des Brennstoffzellen-Heizsystems durchgeführt wird.

## Claims

1. Method for the monitoring of the carbon monoxide emission of a fuel cell heating system having a reformer (2), a fuel cell stack (1) and an afterburner (3), a reformer temperature sensor (6) for detecting the reformer temperature, an afterburner temperature sensor (7) for detecting the afterburner temperature, a voltage sensor (10) for detecting the stack voltage and having a mass flow sensor (5) for detecting the cathode air mass flow rate, **characterised by** the cyclic steps of
a) determining whether the afterburner temperature is within a range of between 750°C and 1000°C;
b) determining whether the reformer temperature is greater than 550°C, preferably greater than 640°C;
c) determining whether the cathode mass air flow rate is greater than 7.5 times the nominal mass gas flow rate in nominal operation;
d) determining whether the stack voltage is greater than 0.65 V per cell of the stack;
e) outputting of an error signal if the result of the determinations of one of steps a) to d) was negative,
and **characterised in that** the mass flow sensor (5) is a pressure switch which switches at a cathode mass air flow which is 7.5 times the nominal mass gas flow.

2. Method according to claim 1, **characterised in that** after each of steps a) to d) the error signal is output if the result of the verification of the last step was negative.

3. Method according to claim 2, **characterised in that** the following steps b), c), d) or c), d) or d) are no longer carried out if the result of the verification of one of the steps a), b) or c) was negative.

4. Method according to any one of the preceding claims, **characterised in that**, after a cold start of the fuel cell heating system, the cyclic steps a) and b) are only started after a start time of 1 to 2 minutes.

5. Method according to any one of the preceding claims, **characterised in that** in step d) a determination of whether the stack voltage is greater than 0.9 V per cell of the stack is carried out after the start of the fuel cell heating system up till the end of a start-up period of 3 to 5 minutes.

6. Method according to any one of the preceding claims, **characterised in that** a carbon monoxide error message is output in the event of an error signal.

7. Method according to any one of the preceding claims, **characterised in that** an emergency switch-off of the fuel cell heating system is carried out in the event of an error signal.

## Revendications

1. Procédé de surveillance de l'émission de monoxyde de carbone d'un système de chauffage à pile à combustible avec un reformeur (2), un bloc de pile à combustible (1) et un post-brûleur (3), un capteur de température de reformeur (6) pour la détection de la température de reformeur, un capteur de température de post-brûleur (7) pour la détection de la température de post-brûleur, un capteur de tension (10) pour la détection de la tension de bloc et avec un capteur de courant de masse (5) pour la détection du courant de masse d'air de cathode, **caractérisé par** les étapes cycliques consistant à
a) vérifier si la température de post-brûleur est dans une plage entre 750 et 1000 °C,
b) vérifier si la température de reformeur est supérieure à 550 °C, de préférence supérieure à 640 °C,
c) vérifier si le courant de masse d'air de cathode est supérieur à 7,5 fois le courant de masse de gaz nominal en fonctionnement nominal,
d) vérifier si la tension de bloc est supérieure à 0,65 V par pile du bloc,
e) émettre un signal d'erreur si le résultat de la vérification d'une des étapes a) à d) était négatif,
et **caractérisé en ce que** le capteur de courant de masse (5) est un commutateur de pression qui commute lors d'un courant de masse d'air de cathode qui fait 7,5 fois le courant de masse de gaz nominal.

2. Procédé selon la revendication 1, **caractérisé en ce que**, après chacune des étapes a) à d), le signal d'erreur est émis lorsque le résultat de la vérification de la dernière étape était négatif.

3. Procédé selon la revendication 2, **caractérisé en ce que** les étapes suivantes b), c), d) ou c), d) ou d) ne sont plus réalisées lorsque le résultat de la vérification d'une des étapes a), b) ou c) était négatif.

4. Procédé selon l'une quelconque des revendications précédentes, **caractérisé en ce que**, après un démarrage à froid du système de chauffage à pile à combustible, les étapes cycliques a) et b) ne sont commencées qu'après un temps de démarrage de 1 à 2 minutes.

5. Procédé selon l'une quelconque des revendications précédentes, **caractérisé en ce que**, après le démarrage du système de chauffage à pile à combustible, il est vérifié jusqu'à la fin d'une période de démarrage de 3 à 5 minutes à l'étape d) si la tension de bloc est supérieure à 0,9 V par pile du bloc.

6. Procédé selon l'une quelconque des revendications précédentes, **caractérisé en ce que** lors d'un signal d'erreur un message d'erreur de monoxyde de carbone est émis.

7. Procédé selon l'une quelconque des revendications précédentes, **caractérisé en ce que** lors d'un signal d'erreur un arrêt d'urgence du système de chauffage à pile à combustible est réalisé.
